# EUROPEAN PATENT APPLICATION

(11) **EP 4 477 054 A1**
(43) Date of publication of application: **18.12.2024**
(21) Application number: 24179345.4
(22) Date of filing: 31.05.2024
(51) Int. Cl.: A01G 3/053, A01G 3/06, A01G 3/08, H01M 50/262, A01D 34/00, B25F 5/00

(54) **DEVICE FOR MAINTAINING A LAWN OR GARDEN**

(30) Priority: 15.06.2023 IT 202300012372
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT); CALLEGARO, Antonio, 31100 Treviso (IT)
(74) Representative: PGA S.p.A.

(57) **Abstract**

The present invention relates to a device for the maintenance of a land or garden, which comprises a support structure (2), a work unit (3) carried by the support structure and configured to operate on the ground to be maintained, a battery holder (5) housing a battery (4). The battery comprises a locking mechanism (6) having a retractable element (7) movable between a locked position in which it constrains the battery to the battery holder and a release position in which it allows the extraction of the battery from the battery holder. The locking mechanism also has a control lever (8), connected to the retractable element and having a terminal end (8a) movable along a movement trajectory (A) to move the same retractable element from the locked position to the release position. The retractable element, during the movement between the locked position and the release position, travels an operating path (B) transverse to the movement trajectory of the terminal end of the control lever.

## Description

### FIELD OF THE INVENTION

The present disclosure relates to a device for the maintenance of lands or gardens, for example for executing grass mowing operations and/or pruning operations on plants, shrubs and hedges, for example a device usable as a brush cutter, turf trimmer, lawnmower and/or lawnmower tractor.

### STATE OF THE ART

Devices for executing maintenance operations, such as mowing turfgrass and pruning plants and hedges, are known in the field of gardening and land maintenance. Such devices have one or more electric motors designed to drive a work unit having a cutting tool adapted to execute maintenance operations on the land or garden. Each motor is electrically powered by a removable battery, housed and constrained to a battery holder by means of a locking mechanism which prevents the extraction thereof during the normal use of the device. The locking mechanism has a retractable element, which interferes with the battery holder and can be moved by a sliding tab to disengage it from the battery holder itself. In order to extract the battery, a user acts, with one hand, on the sliding tab to disengage the retractable element from the battery holder and at the same time, inserts the other hand into a gap formed between the battery and the battery holder, to push the battery from the bottom and extract it from the battery holder.

Although the solution described above provides a device for the maintenance of lands powered by removable batteries, the Applicant has found that such a solution highlights limitations and drawbacks, and can therefore be improved in certain respects.

### OBJECT OF THE INVENTION

Therefore, the object of the present disclosure is to solve at least one of the drawbacks and/or limitations of the previous solutions.

A first objective is to provide a device for the maintenance of a land or garden capable of facilitating the maintenance operations executed on the device itself by an operator.

A further objective is to provide a device for the maintenance of a land or garden having a simple and compact structure capable of minimizing overall dimensions.

It is then the object of the present disclosure to provide a device for the maintenance of a land or garden capable of safeguarding the safety of an operator during the maintenance operations.

A further object of the present disclosure is to provide a device for the maintenance of a land or garden which is robust and reliable.

These and still other objects, which will appear more clearly from the following description, are substantially achieved by a machine for the maintenance of land or gardens in accordance with one or more of the appended claims and/or the following aspects.

### SUMMARY

Aspects of the invention are described here below.

In a 1st aspect, a device for the maintenance of a land or garden is provided comprising:
- a support structure (2),
- a work unit (3) carried by the support structure (2) and configured for operating on the land to be maintained,
- a battery holder (5) engaged to the support structure (2),
- a battery (4) accommodated in the battery holder (5) and comprising a locking mechanism (6) having:
   o a retractable element (7) which is movable relative to the battery holder (5) between:
      - a locked position in which it constrains the battery (4) to the battery holder (5),
      - a release position in which it allows the extraction of the battery (4) from the battery holder (5),
   o a control lever (8) connected to the retractable element (7),

   in which the control lever (8) has a terminal end (8a) opposite the retractable element (7) and movable relative to the battery holder (5) along a movement trajectory (A) with the battery holder (5) facing outwards, for moving the same retractable element from the locked position to the release position,
   in which the retractable element (7), during the movement between the locked position and the release position, travels an operating path (B) at least in part transverse to the movement trajectory (A) of the terminal end (8a) of the control lever (8).

In a 2nd aspect according to the preceding aspect, the retractable element (7) of the locking mechanism (6), during the movement between the locked and release positions and vice versa, translates along an optionally flat sliding surface (S).

In a 3rd aspect according to the preceding aspect, the movement trajectory (A) travelled by the terminal end (8a) of the control lever (8) is transverse, optionally orthogonal, to the sliding surface (S) of the retractable element (7).

In a 4th aspect according to any one of the preceding aspects, the control lever (8), during the movement of the terminal end (8a) along the movement trajectory (A), rotates and/or translates with respect to the battery holder (5).

In a 5th aspect according to any one of the preceding aspects, the control lever (8) is at least movable by rotation about a rotation axis (X) transverse to the movement trajectory (A) of the terminal end (8a) of the control lever (8) and/or transverse to the operating path (B) of the retractable element (7).

In a 6th aspect according to the preceding aspect, the rotation axis (X) of the control lever (8) is parallel to the sliding surface or plane (S) of the retractable element (7).

In a 7th aspect according to any one of the preceding aspects, the retractable element (7) is movable relative to the control lever (8).

In an 8th aspect according to any one of the preceding aspects, the retractable element (7) is hinged to the control lever (8).

In a 9th aspect according to any one of the preceding aspects from the 1st to the 6th aspect, the operating path (B) followed by the retractable element (7) during the movement between the locked and release positions, has a curvilinear profile.

In a 10th aspect according to any one of the preceding aspects from the 1st to the 6th aspect or according to the preceding aspect, the control lever (8) and the retractable element (7) form a single rigid body.

In an 11th aspect according to any one of the preceding aspects, the control lever (8) comprises:
- a first body (9) engaged to the retractable element (7),
- a second body (10) transversely joined to the first body (9) to form a single rigid body.

In a 12th aspect according to the preceding aspect, the control lever (8) has an "L", "C", "V" or "U" shape, and In a 13th aspect according to any one of the two preceding aspects when dependent on the 5th aspect, the rotation axis (X) of the control lever (8) crosses a junction section between the first and the second body (9, 10) of the same control lever.

In a 14th aspect according to any one of the preceding aspects, the battery holder (5) comprises a recess (15) having at least one locking surface (16) configured to cooperate with the retractable element (7), when in the locked position, to constrain the battery (4) to the battery holder (5).

In a 15th aspect according to any one of the preceding aspects, the retractable element (7) is a latch.

In a 16th aspect according to any one of the preceding aspects, the retractable element (7) comprises an abutment wall (7a) facing the control lever (8) and configured to interfere, in the locked position of the same retractable element, with the locking surface (16) of the recess (15) formed on the battery holder (5).

In a 17th aspect according to the preceding aspect, the retractable element (7) comprises a front wall (7b) adjacent and inclined to the abutment wall (7a), to facilitate the insertion of the retractable element (7) in the recess (15) of the battery holder (5).

In an 18th aspect according to any one of the preceding aspects, the battery (4) comprises a support (13) defining a cavity where the retractable element (7) of the locking mechanism (6) is housed.

In a 19th aspect according to the preceding aspect, the cavity of said support (13) is at least partly counter-shaped to the retractable element (7) to guide the same retractable element between the locked position and the release position and vice versa.

In a 20th aspect according to any one of the two preceding aspects, the retractable element (7), in the release position, is at least partly housed in the support (13).

In a 21st aspect according to any one of the preceding aspects, the battery (4) comprises at least one elastic return component (14), optionally a spring, acting on the control lever (8) or on the retractable element (7) to move at least said retractable element (7) from the release position to the locked position.

In a 22nd aspect according to the preceding aspect when dependent on any one of the preceding aspects from the 18th to the 20th, the elastic return component (14) operates in the cavity of the support (13) interposed between an inner surface of the same support (13) and the retractable element (7).

In a 23rd aspect according to any one of the preceding aspects, the battery (4) comprises an outer casing (12) housing one or more cells (17) optionally lithium-ion.

In a 24th aspect according to the preceding aspect, the retractable element (7), at least in the release position, is comprised within a peripheral space of the same outer casing.

In a 25th aspect according to any one of the preceding aspects, the locking mechanism (6) comprises a gripping element (11) associated with the control lever (8) at the terminal end (8a) of the same control lever.

In a 26th aspect according to the preceding aspect, the gripping element (11) is configured to allow a user to grip the battery (4) and cause the movement of the retractable element (7) from the locked position to the release position.

In a 27th aspect according to any one of the two preceding aspects, the gripping element (11) is movable relative to the control lever (8).

In a 28th aspect according to any one of the three preceding aspects, the gripping element (11) is hinged to the terminal end (8a) of the control lever (8).

In a 29th aspect according to any one of the four preceding aspects, the gripping element (11) is movable along a gripping trajectory (C) having at least one component parallel to the movement trajectory (A) travelled by the control lever (8).

In a 30th aspect according to the preceding aspect, a component of said gripping trajectory (C) of the gripping element (11) is parallel to a component of the movement trajectory (A) travelled by the control lever (8).

In a 31st aspect according to any one of the preceding aspects from the 25th to the 30th aspect, the gripping element (11) comprises a removable type locking component (21), configured to selectively constrain the same gripping element to a/the outer casing (12) of the battery (4).

In a 32nd aspect according to the preceding aspect, the locking component (21) is a magnet or a removable mechanical connection element, for example of the hook and loop fastener type.

In a 33rd aspect according to any one of the preceding aspects, the retractable element (7) extends transversely to cover a preponderant part of the width of the battery (4).

In a 34th aspect according to any one of the preceding aspects, the device (1) is selected among a brush cutter, a turf trimmer, a lawnmower or a lawnmower tractor.

In a 35th aspect, a method is provided for disassembling the battery of the device according to any one of the preceding aspects.

In a 36th aspect according to the preceding aspect, the method comprises:
- lifting the end portion (8a) of the control lever (8) to determine a movement of the retractable element (7) from the locked position in which it constrains the battery (4) to the battery holder (5), to the release position in which it allows the extraction of the battery (4) from the battery holder (5),
- extracting the battery (4) from the battery holder (5).

In a 37th aspect according to the preceding aspect, the step of extracting the battery (4) from the battery holder (5) comprises a step of pulling on the gripping element (11).

In a 38th aspect, a device is provided for the maintenance of a land or garden comprising:
- a support structure (2),
- a work unit (3) carried by the support structure (2) and configured for operating on the land to be maintained,
- a battery holder (5) engaged to the support structure (2),
- a battery (4) accommodated in the battery holder (5) and comprising a locking mechanism (6) having:
   o a retractable element (7) which is movable relative to the battery holder (5) between:
      - a locked position in which it constrains the battery (4) to the battery holder (5),
      - a release position in which it allows the extraction of the battery (4) from the battery holder (5),
   o a control lever (8) connected to the retractable element (7),

in which the control lever (8) has a terminal end (8a) opposite the retractable element (7) and movable relative to the battery holder (5) along a movement trajectory (A) for moving the same retractable element from the locked position to the release position,
in which the retractable element (7), during the movement between the locked position and the release position, travels an operating path (B) at least in part transverse to the movement trajectory (A) of the terminal end (8a) of the control lever (8).

In a 39th aspect according to the preceding aspect, the retractable element (7) of the locking mechanism (6), during the movement between the locked and release positions and vice versa, translates along an optionally flat sliding surface (S),

In a 40th aspect according to the preceding aspect, the movement trajectory (A) travelled by the terminal end (8a) of the control lever (8) is transverse, optionally orthogonal, to the sliding surface (S) of the retractable element (7).

In a 41st aspect according to any one of the preceding aspects from the 38th to the 40th, the movement trajectory (A) of the terminal end (8a) has the battery holder (5) facing outwards.

In a 42nd aspect according to any one of the preceding aspects from the 38th to the 41st, the control lever (8), during the movement of the terminal end (8a) along the movement trajectory (A), rotates and/or translates with respect to the battery holder (5).

In a 43rd aspect according to any one of the preceding aspects from the 38th to the 42nd, the control lever (8) is at least movable by rotation about a rotation axis (X) transverse to the movement trajectory (A) of the terminal end (8a) of the control lever (8) and/or transverse to the operating path (B) of the retractable element (7).

In a 44th aspect according to the preceding aspect, the rotation axis (X) of the control lever (8) is parallel to the sliding surface or plane (S) of the retractable element (7).

In a 45th aspect according to any one of the preceding aspects from the 38th to the 44th, the operating path (B) followed by the retractable element (7) during the movement between the locked and release positions, has a curvilinear profile.

In a 46th aspect according to any one of the preceding aspects from the 38th to the 45th, the control lever (8) and the retractable element (7) form a single rigid body.

In a 47th aspect according to any one of the preceding aspects from the 38th to the 46th, the retractable element (7) is movable relative to the control lever (8).

In a 48th aspect according to any one of the preceding aspects from the 38th to the 47th, the retractable element (7) is hinged to the control lever (8).

In a 49th aspect according to any one of the preceding aspects from the 38th to the 48th, the control lever (8) comprises:
- a first body (9) engaged to the retractable element (7),
- a second body (10) transversely joined to the first body (9) to form a single rigid body.

In a 50th aspect according to the preceding aspect, one/the rotation axis (X) of the control lever (8) crosses a junction section between the first and the second body (9, 10) of the control lever (8).

In a 51st aspect according to any one of the preceding aspects from the 38th to the 50th, the control lever (8) has an "L", "C", "V" or "U" shape.

In a 52nd aspect according to any one of the preceding aspects from the 38th to the 47th, the control lever (8) comprises a connecting body (9') engaged to the retractable element (7) and to the terminal end (8a) at opposite terminal sections.

In a 53rd aspect according to the preceding aspect, the control lever (8) has at least one rotation pin (8b) engaged at the terminal end (8a) on the side opposite the connecting body (9').

In a 54th aspect according to the preceding aspect, a/the rotation axis (X) of the control lever (8) crosses said rotation pin (8b).

In a 55th aspect according to any one of the two preceding aspects, the at least one rotation pin (8b) extends transversely to the operating path (B).

In a 56th aspect according to any one of the three preceding aspects, the rotation pin (8b) is directly engaged to the terminal end (8a).

In a 57th aspect according to any one of the preceding aspects from the 53rd to the 55th, the rotation pin (8b) is engaged to the terminal end (8a) by a separating body (8c) emerging away from the terminal end (8a) on the side opposite the connecting body (9').

In a 58th aspect according to the preceding aspect, the separating body (8c) extends parallel to the operating path (B) of the retractable element (7).

In a 59th aspect according to any one of the preceding aspects from the 38th to the 58th, the retractable element (7) is a latch.

In a 60th aspect according to any one of the preceding aspects from the 38th to the 59th, the battery holder (5) comprises a recess (15) having at least one locking surface (16) configured to cooperate with the retractable element (7), when in the locked position, to constrain the battery (4) to the battery holder (5).

In a 61st aspect according to the preceding aspect, the retractable element (7) comprises an abutment wall (7a) facing the control lever (8) and configured to interfere, in the locked position of the same retractable element, with the locking surface (16) of the recess (15) formed on the battery holder (5).

In a 62nd aspect according to the preceding aspect, the retractable element comprises a front wall (7b) adjacent and inclined to the abutment wall (7a), to facilitate the insertion of the retractable element (7) in the recess (15) of the battery holder (5).

In a 63rd aspect according to any one of the preceding aspects from the 38th to the 62nd, the battery (4) comprises a support (13) defining a cavity where the retractable element (7) of the locking mechanism (6) is housed.

In a 64th aspect according to the preceding aspect, the cavity of said support (13) is at least partly counter-shaped to the retractable element (7) to guide the same retractable element between the locked position and the release position and vice versa.

In a 65th aspect according to any one of the two preceding aspects, the retractable element (7), in the release position, is at least partly housed in the support (13).

In a 66th aspect according to any one of the preceding aspects from the 38th to the 65th, the battery (4) comprises at least one elastic return component (14), optionally a spring, acting on the retractable element (7) to move at least said retractable element (7) from the release position to the locked position.

In a 67th aspect according to the preceding aspect when dependent on any one of the preceding aspects from the 63rd to the 65th, the elastic return component (14) operates in the cavity of the support (13) interposed between an inner surface of the same support (13) and the retractable element (7).

In a 68th aspect according to any one of the preceding aspects from the 38th to the 67th, the battery (4) comprises an outer casing (12) housing one or more cells (17) optionally lithium-ion.

In a 69th aspect according to the preceding aspect, the retractable element (7), at least in the release position, is comprised within a peripheral space of the same outer casing.

In a 70th aspect according to any one of the preceding aspects from the 38th to the 69th, the locking mechanism (6) comprises a gripping element (11) associated with the control lever (8) at the terminal end (8a) of the same control lever.

In a 71st aspect according to the preceding aspect, the gripping element (11) is configured to allow a user to grip the battery (4) and cause the movement of the retractable element (7) from the locked position to the release position.

In a 72nd aspect according to any one of the two preceding aspects, the gripping element (11) is movable relative to the control lever (8).

In a 73rd aspect according to any one of the three preceding aspects, the gripping element (11) is hinged to the terminal end (8a) of the control lever (8).

In a 74th aspect according to any one of the four preceding aspects, the gripping element (11) is movable along a gripping trajectory (C) having at least one component parallel to the movement trajectory (A) travelled by the control lever (8).

In a 75th aspect according to the preceding aspect, a component of said gripping trajectory (C) of the gripping element (11) is parallel to a component of the movement trajectory (A) travelled by the control lever (8).

In a 76th aspect according to any one of the preceding aspects from the 70th to the 75th, the gripping element (11) comprises a removable type locking component (21), configured to selectively constrain the same gripping element to a/the outer casing (12) of the battery (4).

In a 77th aspect according to the preceding aspect, the locking component (21) is a magnet or a removable mechanical connection element, for example of the hook and loop fastener type.

In a 78th aspect according to any one of the preceding aspects from the 38th to the 77th, the retractable element (7) extends transversely to cover a preponderant part of the width of the battery (4).

In a 79th aspect according to any one of the preceding aspects from the 38th to the 78th, the device (1) is selected among a brush cutter, a turf trimmer, a lawnmower or a lawnmower tractor.

In an 80th aspect according to any one of the preceding aspects from the 38th to the 46th and from the 52nd to the 69th, the movement trajectory (A) of the terminal end (8a) has the battery holder (5) facing inwards.

In an 81st aspect according to any one of the preceding aspects from the 38th to 46th, from the 52nd to the 69th and the 80th, the control lever (8) is slidably engaged to the retractable element (7).

In an 82nd aspect according to any one of the preceding aspects from the 38th to the 46th, from the 52nd to the 69th, 80th and 81st, the retractable element (7) has one or more passage openings to allow, during the transition of the retractable element (7) from the locking condition to the release condition and vice versa, the sliding of the control lever (8), optionally of the connecting body (9'), with respect to the retractable element (7). In an 83rd aspect according to any one of the preceding aspects from the 38th to the 46th, from the 52nd to the 69th and from the 80th to the 82nd, the outer casing (12) comprises support elements (30) engageable to the rotation pin (8b) of the control lever (8), to allow the rotation thereof relative to the same outer casing.

In an 84th aspect according to any one of the preceding aspects, each of said support elements (30) has a cavity (31) defining a respective seat to at least partially house the rotation pin (8b) and allow the rotation thereof about the rotation axis (X) with respect to the outer casing (12).

In an 85th aspect according to any one of the preceding aspects from the 38th to the 84th, the terminal end (8a) of the control lever (8) has a central zone (33) having a lowered surface, optionally convex, to facilitate the pressure of the terminal end (8a) by a user.

In an 86th aspect according to any one of the preceding aspects from the 38th to the 46th, from the 52nd to the 69th and from the 80th to the 85th, the device comprises a gripping element (11) associated with the outer casing (12) to allow a user to grip the battery (4).

In an 87th aspect according to the preceding aspect, the gripping element (11) has an elongated body distinct from the locking mechanism (6) and movable relative to the same locking mechanism (6).

In an 88th aspect according to the preceding aspect when dependent on the 68th aspect, the elongated body of the gripping element (11) is hinged to the outer casing (12) at respective terminal ends connecting opposite sides of the outer casing (12).

In an 89th aspect according to any one of the two preceding aspects, the gripping element (11) extends transversely to the operating path (B) of the retractable element (7).

In a 90th aspect, a method is provided for disassembling the battery of the device according to any one of the preceding aspects from the 38th to the 89th.

In a 91st aspect according to the preceding aspect, the method comprises:
- lifting or pressing the end portion (8a) of the control lever (8) to determine a movement of the retractable element (7) from the locked position in which it constrains the battery (4) to the battery holder (5), to the release position in which it allows the extraction of the battery (4) from the battery holder (5),
- extracting the battery (4) from the battery holder (5).

### BRIEF DESCRIPTION OF THE DRAWINGS

Some embodiments and aspects of the invention will be described hereinafter with reference to the accompanying drawings, given merely for illustrative, non-limiting purposes in which:
- figure 1 is a detailed view of a battery mounted on a lawnmower tractor of the prior art;
- figure 2 is a perspective detailed view of a battery holder of a device for the maintenance of lands in accordance with the present disclosure;
- figures 3 and 4 are perspective views of a battery of the device in accordance with the present disclosure;
- figure 5 is a sectional side view of a battery of the device with a retractable element in a locked position;
- figure 6 is a sectioned perspective view of a battery of the device in accordance with the present disclosure;
- figure 7 is a sectional side view of a battery of the device with a retractable element in a release position;
- figure 8 is a detailed view of a locking mechanism carried by the battery shown in figures 2 and 3;
- figure 9 is a sectional side view of a variant of the battery of figure 7,
- figure 10 is a perspective view of a further variant of the battery of the device in accordance with the present disclosure;
- figure 11 is a sectional side view of the battery of figure 10 with a retractable element in a locked position;
- figure 12 is a sectional side view of the battery of figure 10 with a retractable element in a release position;
- figure 13 is a detailed view of a locking mechanism carried by the battery shown in figure 10,
- figure 14 is a perspective view of a slice of the battery shown in figure 10.

### DEFINITIONS AND CONVENTIONS

It should be noted that in the present detailed description, corresponding parts illustrated in the various figures are indicated with the same numerical references. The figures could illustrate the object of the present disclosure through non-scale depictions; therefore, the parts and components illustrated in the figures related to the object of the disclosure could exclusively relate to schematic depictions.

### DETAILED DESCRIPTION

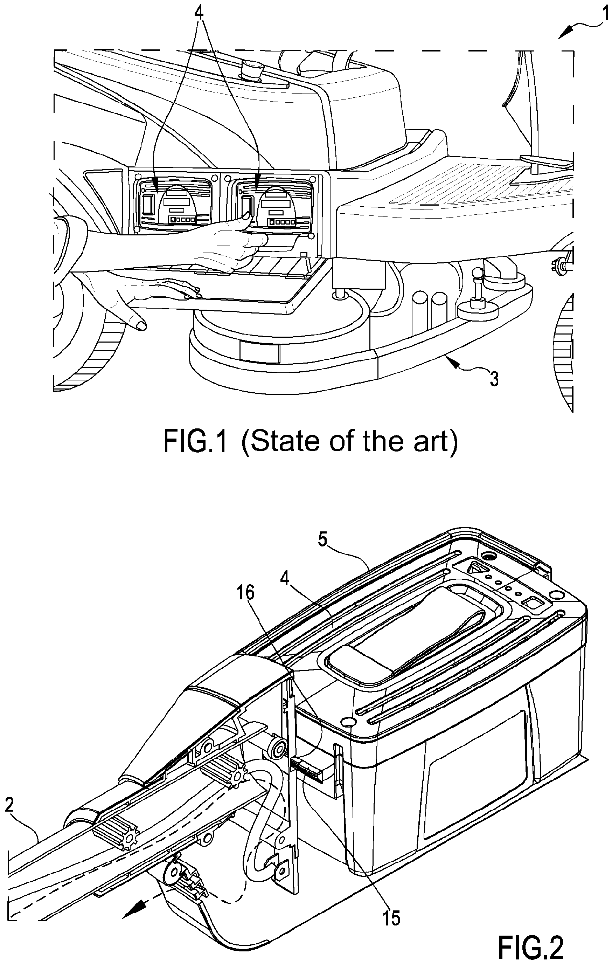

The reference number 1 indicates a device for the maintenance of a land or garden, for example for cutting grass, hedges or for pruning trees. In an example shown in figure 2B, the device 1 can be a turf trimmer having a support structure 2 which, in the specific case, can be a rod to which a work unit 3 having a motor 3a for the movement of a cutting wire 3b is engaged. The device 1 can also comprise a battery holder 5 housing a battery 4 for powering both the motor 3a and further electrical/electronic components on board the device. Still with reference to the embodiment of figure 2B, the battery holder 5 can be located at an end of the support structure 2 opposite the work unit 3. The device can also comprise a handle 20 carried by the support structure 2 interposed between the work unit 3 and the battery 4, to allow a user to manoeuvre the device itself.

In further embodiments not shown in the attached figures, the device can be a hedge trimmer or a chainsaw, having a work unit 3 with one or more cutting blades. Alternatively, the device 1 can be a blower adapted to move, by means of a work unit 3 having a suction mouth, leaves, grass and dust. In each of the alternatives presented above, the device always has a support structure 2, either a rod or a frame, to which the work unit 3 and the battery 4 are engaged at longitudinally opposite ends.

In yet another example, the device 1 can be a lawnmower tractor having a support structure 2 which, in the specific case can be a frame, to which a work unit 3 is engaged below, where a motor for driving one or more cutting blades operates. In this last embodiment variant, similarly to what is shown in figure 1 where a lawnmower tractor belonging to the prior art is illustrated, the battery/the batteries 4 can be brought from the support structure 2 and located to the side of the lawnmower tractor to be removed by a user. However, the possibility of positioning the batteries in alternative zones of the lawnmower tractor, such as below a seat or behind the lawnmower tractor itself, is not excluded.

Passing now to disclose a zone of the device in which the battery 4 is located, it should be noted that this is housed and selectively constrained to the battery holder 5 by means of a locking mechanism 6 disclosed below (figure 2A). The battery holder 5 can comprise a recess 15 having at least one locking surface 16 configured to cooperate with the battery locking mechanism 6 to prevent the extraction thereof during the normal use of the device itself.

The battery 4 can instead comprise an outer casing 12 housing one or more cells, optionally lithium-ion, for powering, as previously mentioned, the motor and the further electrical components on board the device. The outer casing 12 can also comprise one or more side guides 18 for guiding the battery 4 in insertion inside the battery holder 5. In an example, the side guides 18 can be made at least on a side wall of the casing 12 where the locking mechanism 6 is defined. In such a configuration, the guides 18 allow to align the locking mechanism 6 with the recess 15 of the battery holder 5 to which the same locking mechanism engages.

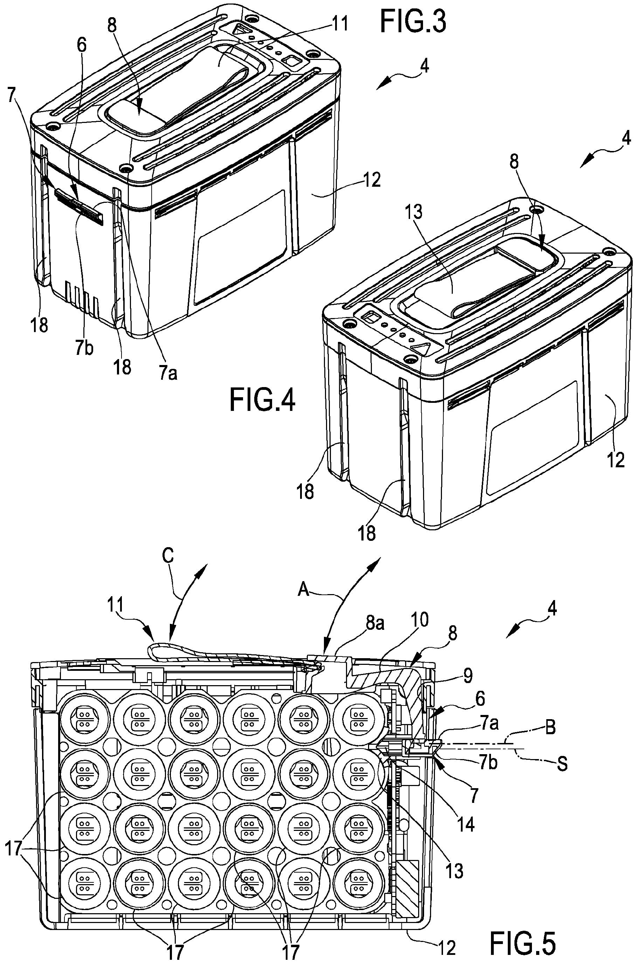

The battery 4 can also comprise a support 13 defining a cavity where a retractable element 7 forming part of the locking mechanism 6 is housed, configured to selectively engage with the recess 15 of the battery holder 5. In an example, the cavity can be at least partially counter-shaped to the retractable element 7 to allow the movement thereof inside and outside the recess 15 of the battery holder 5. The battery 4 can also comprise an elastic return component 14, such as a spring, acting on the retractable element 7 to move it relative to the support 13, as detailed below. It should be noted that figures 5, 7 and 9 show the elastic return component 14 located in the cavity of the support 13 interposed between an inner surface of the same support and the retractable element 7. However, the possibility of positioning the elastic return component 14 interposed between an inner surface of the outer casing 12 and the locking mechanism 6 is not excluded.

As previously mentioned and with reference to figures 3-9, the battery 4 can have a locking mechanism 6 having the retractable element 7 for constraining or releasing the battery 4 from the battery holder 5. In an example, the retractable element 7 can have the structure and functionality of a latch of a lock. In other words, the retractable element 7 can comprise a prismatic or wedge structure, optionally with a trapezoidal profile, having an abutment wall 7a configured to interfere, when in the locked position, with the locking surface 16 formed on the recess 15 of the battery holder 5, to constrain the battery 4. In an example, the retractable element 7 can extend transversely, optionally interposing two side guides 18, to cover a preponderant part of the width of the battery 4. In such a configuration, the retractable element 7 maximizes the contact area with the battery holder 5, ensuring a stable engagement with the latter.

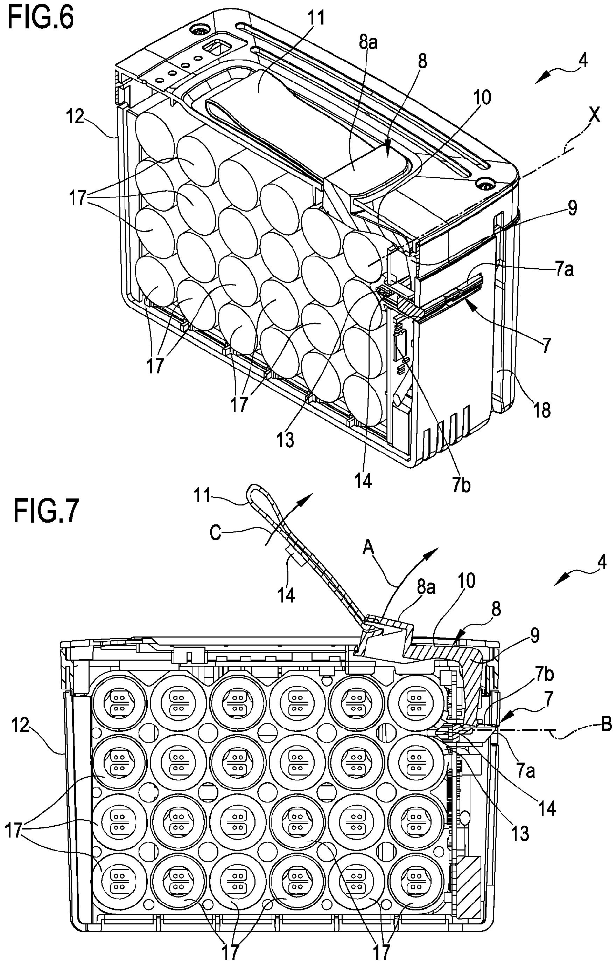

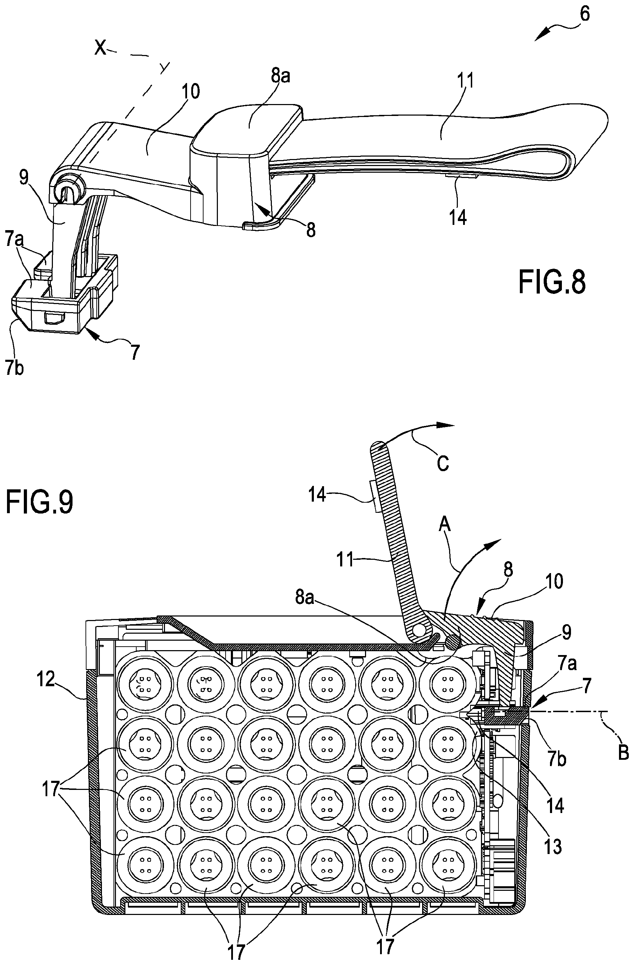

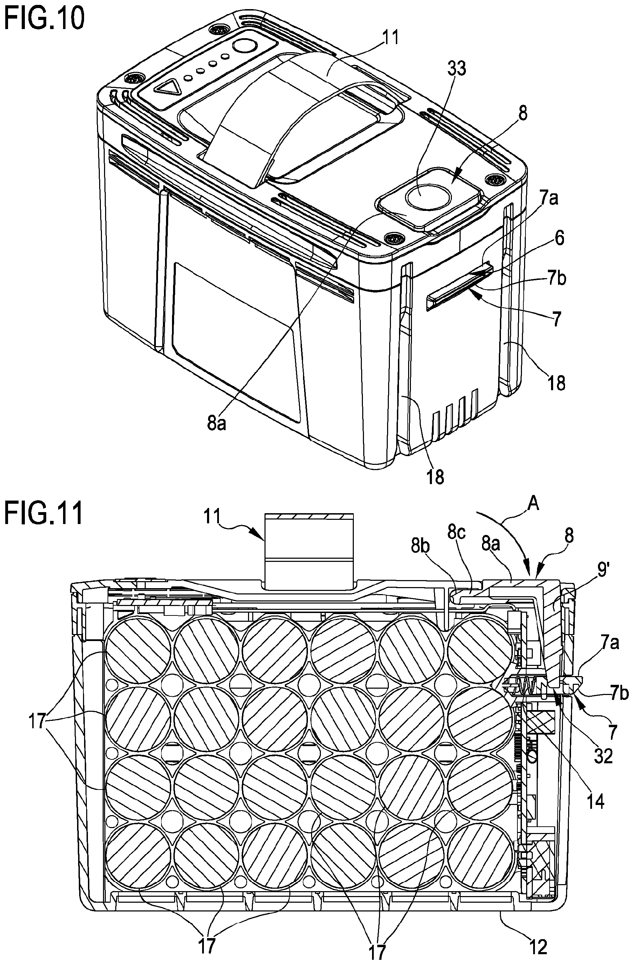

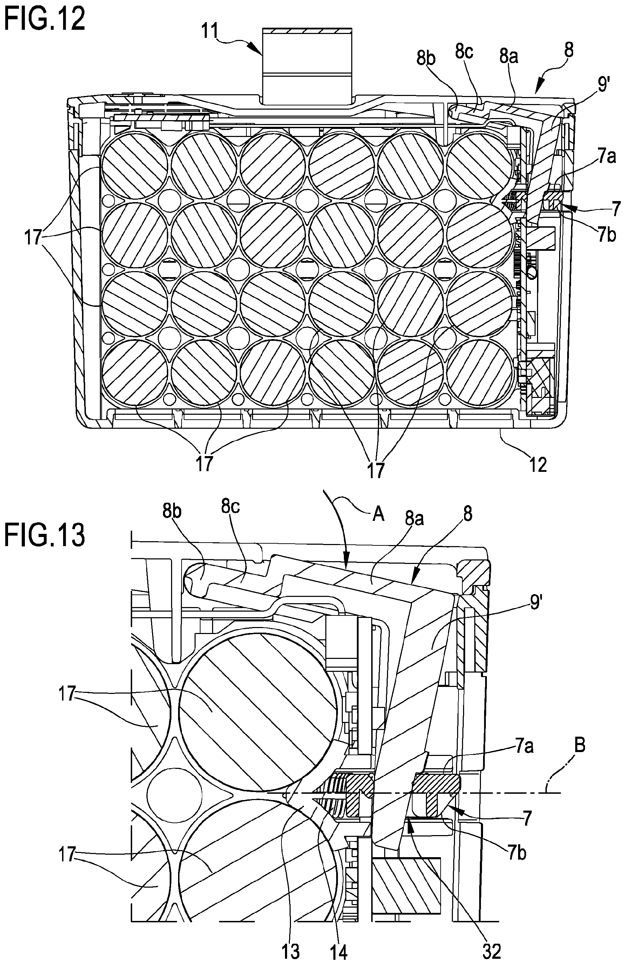

The retractable element 7 can also comprise a front wall 7b, adjacent and inclined with respect to the abutment wall 7a, to facilitate, during the introduction of the battery 4 into the battery holder 5, the insertion of the retractable element 7 into the recess 15 of the battery holder itself. As previously mentioned, the retractable element 7 is movable relative to the support 13, between a locked position in which it constrains the battery 4 to the battery holder 5 and a release position in which it allows the extraction thereof from the battery holder 5. It should be noted how the retractable element 7, in the locked position, is at least partly outside the outer casing 12 of the battery 4 to insert inside the recess 15 of the battery holder 5. Vice versa, in the release position, the retractable element 7 is outside the recess 15 of the battery holder 5, resulting entirely comprised in a peripheral space of the outer casing 12 of the battery 4 to allow the extraction thereof from the battery holder 5. During the movement between the locked position and the release position and vice versa, the retractable element 7 can translate along an operating surface S travelling an operating path B. As for example shown in figures 5 and 7, the retractable element 7 can follow a straight operating path B, translating on a flat operating surface S. In such a case, the retractable element 7 is movable relative to a control lever 8 disclosed below, thus being engaged to the same control lever by means of a hinge constraint. Alternatively, the retractable element 7 can travel a curvilinear operating path B, translating on a surface S also of curvilinear shape (figure 9). In this last embodiment variant, the retractable element 7 is fixed with respect to the control lever 8, forming a single rigid body with the latter. In a further alternative shown in figures 11 and 12, the retractable element 7 can have one or more passage openings 32, in which the control mechanism 8 can be coupled. In an example, the control mechanism 8 can slide relative to the retractable element 7, being inserted or partially extracted in the passage openings 32.

As previously mentioned, the locking mechanism 6 can comprise a control lever 8, associated with the retractable element 7 and configured to move it from the locked position to the release position. The movement of the retractable element 7 in the opposite direction, i.e., from the release position to the locked position, is ensured by the elastic element 14. With reference to figures 5, 7, 8 and 9, the control lever 8 can comprise a first and a second body 9, 10, mutually integral in movement. In an example, the first body 9 is rigidly engaged or hinged to the retractable element 7, while the second body 10 is transversely engaged to the first body 9 to form a single rigid body. In other words, the first and the second body 9, 10 give the control lever a "L", "C", "V" or "U" profile. The control lever 8 can also comprise a terminal end 8a, located on the opposite side with respect to the retractable element, i.e., at a free end of the second body 10, configured to be contacted by a user to move the control lever relative to the outer casing 12 of the battery 4. The movement of the terminal end 8a of the control lever 8 involves the movement of the retractable element 7 relative to the support 13, from the locked position to the release position. As for example shown in figures 5, 7 and 9, the terminal end 8a is movable relative to the outer casing 12 of the battery 4, along a movement trajectory A transverse to the operating path B followed by the retractable element 7. In other words, the movement trajectory A travelled by the terminal end 8a of the control lever 8 is transverse, optionally orthogonal, to the sliding surface S of the retractable element 7. It should be noted that the displacement of the terminal end 8a of the control lever 8 can involve a rotation and/or a translation of the entire lever 8. For example, in the embodiment in which the retractable element 7 is hinged to the first body 9 of the control lever 8 at the abutment wall 7a, the same control lever roto-translates with respect to the outer casing 12 of the battery 4, allowing the movement of the retractable element inside the support 13 (figure 7). Alternatively, in the embodiment variant in which the control lever 8 and the retractable element 7 are joined together to define a single rigid body, the control lever itself rotates with respect to the outer casing 12, resulting in the consequent rotation of the retractable element when inserted into the support 13 (figure 9). In both of the above embodiment variants, the control lever 8 is at least movable by rotation about a rotation axis X which crosses a junction section between the first and the second body 9, 10 of the same control lever 8. As shown in figure 8, the rotation axis X can be parallel to the sliding surface S of the retractable element 7 and furthermore, transverse to both the movement trajectory A of the terminal end 8a and the operating path B followed by the retractable element 7.

It should be noted that the arrangement of a locking mechanism 6 having a control lever 8 and a retractable element 7 movable along respective trajectories transverse to each other, allows to both facilitate the release and extraction operations of the battery 4 from the battery holder 5 and to reduce the overall dimensions of the battery holder 5. With reference, for example, to figure 1 in which a lawnmower tractor of the prior art is illustrated, a user with the purpose of extracting a battery 23 is led to act, with one hand, on a sliding control lever 22 to disengage the retractable element from the battery holder and at the same time, insert the other hand in a gap 19 formed between the battery and the battery holder, to push and extract the battery 23 from the bottom. Unlike the prior art shown where the control lever 22 and the retractable element slide along parallel directions, the movement of the control lever 8 and the retractable element 7 of the present disclosure along trajectories transverse to each other (identified with A and B in the attached figures), allows to disengage and extract the battery 4 from the battery holder 5, acting exclusively on the terminal end 8a of the control lever. In fact, a user who wishes to extract the battery 4 rotates the terminal end 8a of the control lever 8 to bring the retractable element 7 into the release position and subsequently, again acting on the terminal end 8a, pulls the battery 4 with the battery holder 5 facing outwards to extract it. The solution shown in the present disclosure therefore allows to extract the battery 4 using only one hand and consequently, allows to avoid the arrangement of a battery holder 5 having a gap 19 for reaching and extracting the battery from the bottom. Thereby, it is also possible to envisage the arrangement of battery holders having the same size as traditional battery holders, but using batteries 4 having greater capacity for energy storage, thus contributing to increasing the operability of the device.

In accordance with what is shown in figures 2A, 2B and 3-9, the locking mechanism 6 can also comprise a gripping element 11 associated with the control lever 8 to facilitate a user gripping the battery 4 and consequently, facilitate the movement of the retractable element 7 from the locked position to the release position. In an example shown in figures 2A, 2B, 3-8, the gripping element 11 can be a flexible body, for example made of fabric or rubber, rigidly connected to the terminal end 8a of the control lever 8. The elasticity of the material with which the gripping element 11 is made allows it to be moved along a gripping trajectory C transverse to the sliding surface S of the retractable element 7. Optionally, the gripping trajectory C travelled by the gripping element 11 can have at least one component parallel to the movement trajectory A travelled by the control lever 8. In an embodiment variant shown in figure 9, the gripping element 11 can be an inflexible body during normal use of the device, relatively movable with respect to the second body 10 of the control lever 8 thanks to a hinge interposed between the same gripping element 11 and the terminal end 8a of the control lever 8.

The gripping element 11 can also comprise a removable locking component 14 for selectively constraining it to the outer casing 12 of the battery 4. In an example, the locking component 14 can be a magnet or a removable mechanical connection element of the hook and loop fastener type.

In order to extract the battery 4 from the battery holder 5, a user can proceed by lifting the end portion 8a of the control lever 8 to determine a movement of the retractable element 7 from the locked position to the release position and subsequently extract the battery by pulling the same end portion 8a. Alternatively, a user, instead of acting on the terminal end 8a of the control lever 8, can act on the gripping element 11 both to determine the movement of the retractable element, and to pull the battery 4 outside the battery holder 5.

In an embodiment variant of the battery 4 shown in figures 10-14, the control lever 8 can comprise a connecting body 9' slidably engaged to the retractable element 7 and engaged to the terminal end 8a at opposite terminal sections. In other words, the connecting body 9' is directly engaged at the terminal end 8a, defining an "L", "C", "V" or "U" profile of the control lever.

The control lever 8 can also have at least one rotation pin 8b engaged to the terminal end 8a on the side opposite the connecting body 9' and optionally extending transversely to the operating path B of the retractable element 7. The rotation pin 8b can be directly engaged to the terminal end 8a or, as shown for example in figure 13, can be engaged to the terminal end 8a by means of a separating body 8c emerging from the terminal end 8a on the side opposite the connecting body 9'. In an example, the separating body 8c acts as a lever to facilitate the user in driving the control mechanism 8 to extract the battery 4 from the maintenance device. The separating body 8c can be coplanar to the terminal end 8a.

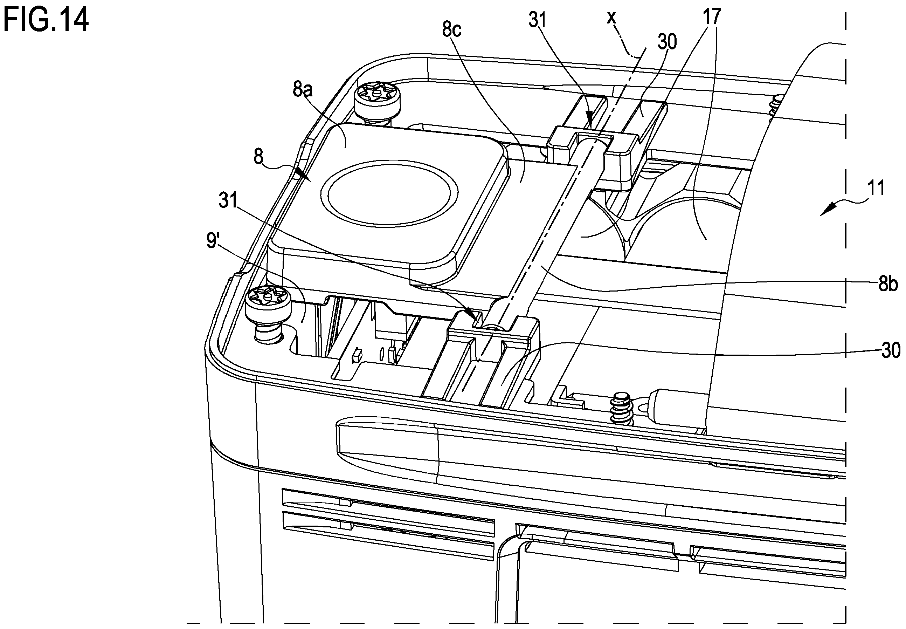

As shown in figure 14, the rotation pin 8b can be supported by support elements 30 of the casing 12, which allow the rotation of the control lever 8 relative to the same outer casing. In an example, each support element 30 has a cavity 31 defining a respective seat for housing, at least in part, the rotation pin 8b.

The terminal end 8a is movable relative to the outer casing 12 of the battery 4, along a movement trajectory A with the battery holder 5 facing inwards and transverse to the operating path B followed by the retractable element 7 (figures 11 and 12). In other words, the movement trajectory A travelled by the terminal end 8a of the control lever 8 is transverse, optionally orthogonal, to the sliding surface S of the retractable element 7. It should be noted how the movement of the terminal end 8a of the control lever 8, involves a rotation of the entire control lever 8 about a rotation axis X which passes through the rotation pin 8b. As shown in figure 13, the rotation axis X can be parallel to the sliding surface S of the retractable element 7 and furthermore, transverse to both the movement trajectory A of the terminal end 8a and the operating path B followed by the retractable element 7. The terminal end 8a of the control lever can have a central zone 33 having a lowered surface, optionally convex, to facilitate the pressure of the terminal end 8a by a user and determine the movement of the retractable element 7 relative to the support 13, from the locked position to the release position (figure 14).

The locking mechanism 6 can also comprise a gripping element 11 associated with outer casing 12 to facilitate a user gripping the battery 4 and consequently, facilitate the movement of the retractable element 7 from the locked position to the release position. In an example, the gripping element 11 can be an elongated body, for example made of flexible material such as fabric or rubber, distinct from the locking mechanism and extending transversely to the operating path (B) of the retractable element (7). The gripping element 11 can be hinged to the outer casing 12 at respective terminal ends connecting opposite sides of the outer casing 12.

In accordance with this latter embodiment shown in figures 10-14, in order to extract the battery 4 from the battery holder 5, a user can proceed by pressing the terminal end 8a of the control lever 8 towards the inside of the casing 12 to determine a movement of the retractable element 7 from the locked position to the release position. Subsequently, the user can extract the battery by pulling the gripping element 11.

## Claims

1. Machine for the maintenance of a land or garden comprising:
- a support structure (2),
- a work unit (3) carried by the support structure (2) and configured for operating on the land to be maintained,
- a battery holder (5) engaged to the support structure (2),
- a battery (4) accommodated in the battery holder (5) and comprising a locking mechanism (6) having:
o a retractable element (7) which is movable relative to the battery holder (5) between:
• a locked position in which it constrains the battery (4) to the battery holder (5),
• a release position in which it allows the extraction of the battery (4) from the battery holder (5),
o a control lever (8) connected to the retractable element (7),
in which the control lever (8) has a terminal end (8a) opposite the retractable element (7) and movable relative to the battery holder (5) along a movement trajectory (A) for moving the same retractable element from the locked position to the release position,
in which the retractable element (7), during the movement between the locked position and the release position, travels an operating path (B) at least in part transverse to the movement trajectory (A) of the terminal end (8a) of the control lever (8).

2. Device according to the preceding claim, wherein the retractable element (7) of the locking mechanism (6), during the movement between the locked and release positions and vice versa, translates along an optionally flat sliding surface (S),
wherein the movement trajectory (A) travelled by the terminal end (8a) of the control lever (8) is transverse, optionally orthogonal, to the sliding surface (S) of the retractable element (7),
wherein the movement trajectory (A) of the terminal end (8a) has the battery holder (5) facing outwards.

3. Device according to any one of the preceding claims, wherein the control lever (8), during the movement of the terminal end (8a) along the movement trajectory (A), rotates and/or translates with respect to the battery holder (5),
wherein the control lever (8) is at least movable by rotation about a rotation axis (X) transverse to the movement trajectory (A) of the terminal end (8a) of the control lever (8) and/or transverse to the operating path (B) of the retractable element (7),
optionally wherein the rotation axis (X) of the control lever (8) is parallel to the sliding surface or plane (S) of the retractable element (7),
wherein the operating path (B) followed by the retractable element (7) during the movement between the locked and release positions, has a curvilinear profile,
optionally wherein the control lever (8) and the retractable element (7) form a single rigid body.

4. Device according to any one of the preceding claims, wherein the retractable element (7) is movable relative to the control lever (8), wherein the retractable element (7) is hinged to the control lever (8).

5. Device according to any one of the preceding claims, wherein the control lever (8) comprises:
- a first body (9) engaged to the retractable element (7),
- a second body (10) transversely joined to the first body (9) to form a single rigid body,
optionally wherein the control lever (8) has an "L", "C", "V" or "U" shape, and
wherein one/the rotation axis (X) of the control lever (8) crosses a junction section between the first and the second body (9, 10) of the same control lever (8).

6. Device according to any one of the preceding claims from 1 to 3, wherein the control lever (8) comprises a connecting body (9') engaged to the retractable element (7) and to the terminal end (8a) at opposite terminal sections,
wherein the control lever (8) has at least one rotation pin (8b) engaged to the terminal end (8a) opposite the connecting body (9'), wherein one/the rotation axis (X) of the control lever (8) crosses said rotation pin (8b), wherein the rotation pin (8b) is directly engaged to the terminal end (8a) or is engaged to the terminal end (8a) by means of a separating body (8c) emerging away from the terminal end (8a) opposite the connecting body (9'),
optionally wherein said separating body (8c) extends parallel to the operating path (B) of the retractable element (7) and wherein the at least one rotation pin (8b) extends transversely to the operating path (B).

7. Device according to any one of the preceding claims, wherein the battery holder (5) comprises a recess (15) having at least one locking surface (16) configured to cooperate with the retractable element (7), when in the locked position, to constrain the battery (4) to the battery holder (5),
wherein the retractable element (7) is a latch and comprises:
- an abutment wall (7a) facing the control lever (8) and configured to interfere, in the locked position of the same retractable element, with the locking surface (16) of the recess (15) formed on the battery holder (5),
- a front wall (7b) adjacent and inclined to the abutment wall (7a), to facilitate the insertion of the retractable element (7) in the recess (15) of the battery holder (5).

8. Device according to any one of the preceding claims, wherein the battery (4) comprises a support (13) defining a cavity where the retractable element (7) of the locking mechanism (6) is housed, wherein the cavity of said support (13) is at least partially counter-shaped to the retractable element (7) to guide the same retractable element between the locked position and the release position and vice versa,
wherein the retractable element (7), in the release position, is at least partly housed in the support (13),
wherein the battery (4) comprises at least one elastic return component (14), optionally a spring, acting on the control lever (8) or on the retractable element (7) to move at least said retractable element (7) from the release position to the locked position,
optionally wherein the elastic return component (14) operates in the cavity of the support (13) interposed between an inner surface of the same support (13) and the retractable element (7).

9. Device according to any one of the preceding claims, wherein the battery (4) comprises an outer casing (12) housing one or more cells (17) optionally made of lithium ions, wherein the retractable element (7), at least in the release position, is comprised within a peripheral space of the same outer casing.

10. Device according to any one of the preceding claims, wherein the locking mechanism (6) comprises a gripping element (11) associated with the control lever (8) at the terminal end (8a) of the same control lever, said gripping element (11) being configured to allow a user to grip the battery (4) and cause the movement of the retractable element (7) from the locked position to the release position,
wherein the gripping element (11) is movable relative to the control lever (8), optionally wherein the gripping element (11) is hinged to the terminal end (8a) of the control lever (8),
wherein the gripping element (11) is movable along a gripping trajectory (C) having at least one component parallel to the movement trajectory (A) travelled by the control lever (8),
optionally wherein a component of said gripping trajectory (C) of the gripping element (11) is parallel to a component of the movement trajectory (A) travelled by the control lever (8),
wherein the gripping element (11) comprises a removable type locking component (21) configured to selectively constrain the same gripping element to an/the outer casing (12) of the battery (4), optionally wherein the locking component (21) is a magnet or a removable mechanical connection element, for example of the hook and loop fastener type,
optionally wherein the retractable element (7) extends transversely to cover a preponderant part of the width of the battery (4),
optionally wherein said device (1) is selected among a brush cutter, a turf trimmer, a lawnmower or a lawnmower tractor.

11. Device according to any one of claims 1, 3, and from 6 to 9, wherein the movement trajectory (A) of the terminal end (8a) has the battery holder (5) facing inwards.

12. Device according to any one of the preceding claims from 1 to 3, from 6 to 9 and 11, wherein the control lever (8) is slidably engaged to the retractable element (7), said retractable element (7) having one or more passage openings (32) to allow, during the transition of the retractable element (7) from the locking condition to the release condition and vice versa, the sliding of the control lever (8), optionally of the connecting body (9'), with respect to the retractable element (7).

13. Device according to any one of the claims from 6 to 9, 11 and 12, in combination with claim 6, wherein the outer casing (12) comprises support elements (30) engageable to the rotation pin (8b) of the control lever (8), to allow the rotation thereof relative to the same outer casing,
wherein each of said support elements has a cavity (31) defining a respective seat to at least partially house the rotation pin (8b) and allow the rotation thereof about the rotation axis (X) with respect to the outer casing (12).

14. Device according to any one of the claims from 6 to 9 and from 11 to 13, comprising a gripping element (11) associated with the outer casing (12) to allow a user to grip the battery (4),
wherein the gripping element (11) has an elongated body distinct from the locking mechanism (6) and movable relative to the same locking mechanism (6),
wherein the elongated body of the gripping element (11) is hinged to the outer casing (12) at respective terminal ends connecting opposite sides of the outer casing (12), optionally extending transversely to the operating path (B) of the retractable element (7).

15. Method for disassembling the battery of the device according to any one of the preceding claims, wherein said method comprises:
- lifting or pressing the end portion (8a) of the control lever (8) to determine a movement of the retractable element (7) from the locked position in which it constrains the battery (4) to the battery holder (5), to the release position in which it allows the extraction of the battery (4) from the battery holder (5),
- extracting the battery (4) from the battery holder (5).
